# EUROPÄISCHE PATENTSCHRIFT

(11) **EP 2 866 990 B1**
(45) Veröffentlichungstag und Bekanntmachung des Hinweises auf die Patenterteilung: **04.03.2020**
(21) Anmeldenummer: 13722335.0
(22) Anmeldetag: 02.05.2013
(51) Int. Cl.: B27G 19/00

(54) **WERKZEUGMASCHINENTRENNVORRICHTUNG MIT SCHUTZEINHEIT**
POWER CUTTING TOOL HAVING A GUARD UNIT
DISPOSITIF DE SÉPARATION POUR MACHINE-OUTIL, DOTÉ D'UNE UNITÉ DE PROTECTION

(30) Priorität: 28.06.2012 DE 102012211091
(43) Veröffentlichungstag der Anmeldung: 06.05.2015
(73) Patentinhaber: Robert Bosch GmbH, 70442 Stuttgart (DE)
(72) Erfinder: ENGELFRIED, Uwe, 73760 Ostfildern (DE); GRULICH, Petr, 73230 Kirchheim/Teck (DE)
(86) Internationale Anmeldenummer: PCT/EP2013/059080
(87) Internationale Veröffentlichungsnummer: WO 2014/000923

(56) Entgegenhaltungen:
- EP-A2- 0 062 188
- EP-A2- 1 498 023
- DE-A1- 3 229 808
- DE-A1-102004 032 973
- DE-A1-102011 005 007
- GB-A- 685 669
- US-A- 2 649 871
- US-A- 3 059 673
- US-A- 3 344 818
- US-A- 3 754 328
- US-A- 3 808 684
- US-A- 4 063 358
- US-A- 4 257 162
- US-A- 4 382 334
- US-A- 5 179 785
- US-A1- 2001 025 423

## Beschreibung

### Stand der Technik

Es sind bereits Werkzeugmaschinentrennvorrichtungen bekannt, die einen Schneidstrang und eine Führungseinheit zu einer Führung des Schneidstrangs aufweisen.

### Offenbarung der Erfindung

Die Erfindung geht aus von einer Werkzeugmaschinentrennvorrichtung, insbesondere von einer Handwerkzeugmaschinentrennvorrichtung, mit zumindest einem Schneidstrang und mit zumindest einer Führungseinheit zu einer Führung des Schneidstrangs gemäß dem Oberbegriff der Ansprüche 1 und 6. Eine solche Vorrichtung ist aus der US 4 382 334 bekannt.

Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang einer Umfangsrichtung einer Führungseinheit der Werkzeugmaschinentrennvorrichtung. Besonders bevorzugt ist der Schneidstrang als Schneidkette ausgebildet. Es ist jedoch auch denkbar, dass der Schneidstrang eine andere, einem Fachmann als sinnvoll erscheinende Ausgestaltung aufweist, wie beispielsweise eine Ausgestaltung als Schneidband, an dem mehrere Schneidstrangsegmente des Schneidstrangs angeordnet sind. Bevorzugt weist der Schneidstrang, entlang einer zumindest im Wesentlichen senkrecht zu einer Schneidebene des Schneidstrangs verlaufenden Richtung betrachtet, eine maximale Abmessung kleiner als 4 mm auf. Vorzugsweise ist die Abmessung als Breite des Schneidstrangs ausgebildet. Besonders bevorzugt weist der Schneidstrang, entlang der zumindest im Wesentlichen senkrecht zur Schneidebene des Schneidstrangs verlaufenden Richtung betrachtet, entlang einer Gesamtlänge des Schneidstrangs, eine zumindest im Wesentlichen gleichbleibende maximale Abmessung auf. Die maximale Abmessung entspricht entlang der Gesamtlänge des Schneidstrangs bevorzugt einem Wert aus einem Wertebereich von 1 mm bis 3 mm. Infolgedessen weist die Werkzeugmaschinentrennvorrichtung, entlang einer Gesamterstreckung der Werkzeugmaschinentrennvorrichtung betrachtet, eine Gesamtbreite auf, die kleiner ist als 4 mm. Somit ist der Schneidstrang vorzugsweise dazu vorgesehen, einen Schneidspalt zu erzeugen, der, entlang der zumindest im Wesentlichen senkrecht zur Schneidebene des Schneidstrangs verlaufenden Richtung betrachtet, eine maximale Abmessung kleiner als 4 mm aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in der Schneidebene betrachtet, entlang eines gesamten Umfangs der Führungseinheit durch die Führungseinheit mittels des Führungselements, insbesondere der Führungsnut, geführt. Besonders bevorzugt bilden der Schneidstrang und die Führungseinheit ein geschlossenes System. Der Begriff "geschlossenes System" soll hier ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind.

Der Ausdruck "beweglich gelagert" soll hier insbesondere eine Lagerung einer Einheit und/oder eines Elements relativ zu zumindest einer weiteren Einheit und/oder einem weiteren Element definieren, wobei die Einheit und/oder das Element, insbesondere entkoppelt von einer elastischen Verformung der Einheit und/oder des Elements und entkoppelt von bedingt durch ein Lagerspiel hervorgerufenen Bewegungsmöglichkeiten, eine Bewegungsmöglichkeit entlang zumindest einer Achse entlang einer Strecke größer als 1 mm, bevorzugt größer als 10 mm und besonders bevorzugt größer als 20 mm und/oder eine Bewegungsmöglichkeit um zumindest eine Achse um einen Winkel größer als 10°, bevorzugt größer als 45° und besonders bevorzugt größer als 60° aufweist. Das Schneidstrangberührschutzelement ist bevorzugt an einer Außenfläche der Führungseinheit beweglich gelagert. Zudem ist das Schneidstrangberührschutzelement vorzugsweise als Schneidstrang- und/oder Führungseinheitsscheide ausgebildet, die einen Bediener vor einem unbeabsichtigten Berühren des Schneidstrangs schützt. Das Schneidstrangberührschutzelement verhindert bevorzugt durch ein Überdecken des Schneidstrangs und/oder der Führungseinheit ein unbeabsichtigtes Berühren des Schneidstrangs. Hierbei verhindert das Schneidstrangberührschutzelement besonders bevorzugt ein unbeabsichtigtes Berühren des Schneidstrangs in einer Betriebsposition, insbesondere einer Schneidstrangschutzposition, des Schneidstrangberührschutzelements, in der das Schneidstrangberührschutzelement den Schneidstrang überdeckt bzw. mit zumindest einer Fläche über den Schneidstrang hinaus ragt. Besonders bevorzugt wird das Schneidstrangberührschutzelement bei einem Ansetzen an ein Werkstück zu einer Bearbeitung des Werkstücks mittels der Werkzeugmaschinentrennvorrichtung in eine Schneidstrangfreigabeposition des Schneidstrangberührschutzelements bewegt. In der Schneidstrangfreigabeposition gibt das Schneidstrangberührschutzelement den Schneidstrang zumindest teilweise zu einer Bearbeitung eines Werkstücks frei. Mittels der erfindungsgemäßen Ausgestaltung der Werkzeugmaschinentrennvorrichtung kann vorteilhaft ein Verletzungsrisiko für einen Bediener der Werkzeugmaschinentrennvorrichtung gering gehalten werden. Somit kann vorteilhaft ein sicheres Handhaben der Werkzeugmaschinentrennvorrichtung erreicht werden.

Des Weiteren wird vorgeschlagen, dass das Schneidstrangberührschutzelement drehbar an der Führungseinheit gelagert ist. Hierdurch kann besonders vorteilhaft eine Schwenkbewegung des Schneidstrangberührschutzelements aus einer Schneidstrangschutzposition in eine Schneidstrangfreigabeposition realisiert werden. Somit kann vorteilhaft ein automatisches Wegschwenken des Schneidstrangberührschutzelements bei einem Ansetzen der Werkzeugmaschinentrennvorrichtung an ein Werkstück zu einer Bearbeitung des Werkstücks mittels der Werkzeugmaschinentrennvorrichtung erreicht werden. Zudem kann eine schwenkbare Lagerung konstruktiv einfach schmutzresistent ausgebildet werden.

Ferner wird vorgeschlagen, dass das Schneidstrangberührschutzelement die Führungseinheit zumindest in einem Teilbereich der Führungseinheit von zumindest zwei Seiten umgibt. Hierbei umgibt das Schneidstrangberührschutzelement die Führungseinheit, betrachtet in einer zumindest im Wesentlichen senkrecht zu einer Schneidebene des Schneidstrangs verlaufenden Ebene, bevorzugt an zumindest zwei Seiten. Besonders bevorzugt umgibt das Schneidstrangberührschutzelement die Führungseinheit zumindest in einem Teilbereich der Führungseinheit von zumindest drei Seiten. Der Ausdruck "von drei Seiten umgeben" soll hier insbesondere eine Anordnung des Schneidstrangberührschutzelements relativ zur Führungseinheit definieren, bei der zwei zumindest im Wesentlichen senkrecht zueinander verlaufende, insbesondere gedachte, Geraden, von denen zumindest eine zumindest im Wesentlichen senkrecht zu einer Seite bzw. Außenfläche der Führungseinheit verläuft, jeweils zumindest einmal das Schneidstrangberührschutzelement und zumindest einmal die Führungseinheit schneiden. Besonders bevorzugt weist das Schneidstrangberührschutzelement, betrachtet in der zumindest im Wesentlichen senkrecht zu einer Schneidebene des Schneidstrangs verlaufenden Ebene, an den drei Seiten der Führungseinheit jeweils eine größere Erstreckung auf als die Führungseinheit. Somit erstreckt sich das Schneidstrangberührschutzelement vorzugsweise entlang zumindest einer Richtung über die Führungseinheit hinaus. Der Begriff "Schneidebene" soll hier insbesondere eine Ebene definieren, in der der Schneidstrang in zumindest einem Betriebszustand zu einer Bearbeitung eines Werkstücks bewegt wird. Vorzugsweise wird der Schneidstrang in der Schneidebene entlang eines Umfangs der Führungseinheit in zumindest zwei zueinander entgegengesetzt gerichtete Schneidrichtungen relativ zur Führungseinheit bewegt. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Mittels der erfindungsgemäßen Ausgestaltung kann vorteilhaft eine großflächige Überdeckung des Schneidstrangs bzw. der Führungseinheit durch das Schneidstrangberührschutzelement erreicht werden.

Vorteilhafterweise weist das Schneidstrangberührschutzelement, betrachtet in einer zumindest im Wesentlichen senkrecht zu einer Schneidebene des Schneidstrangs verlaufenden Ebene, einen u-förmigen Querschnitt auf. Hierdurch kann konstruktiv einfach ein Aufnahmebereich des Schneidstrangberührschutzelements zur Aufnahme bzw. zu einer Überdeckung des Schneidstrangs und/oder der Führungseinheit erreicht werden, in dem der Schneidstrang und/oder die Führungseinheit zumindest in der Schneidstrangschutzposition angeordnet sind.

Zudem wird vorgeschlagen, dass die Schneidstrangberührschutzeinheit zumindest ein Federelement aufweist, das das Schneidstrangberührschutzelement mit einer Federkraft beaufschlagt. Bevorzugt beaufschlagt das Federelement das Schneidstrangberührschutzelement in eine Schneidstrangschutzposition des Schneidstrangberührschutzelements. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement kann als Druckfeder, als Zugfeder, als Torsionsfeder usw. ausgebildet sein. Bevorzugt ist das Federelement als Schenkelfeder oder als Schraubendruckfeder ausgebildet. Eine Ausgestaltung als Tellerfeder, als Evolutfeder usw. ist ebenfalls denkbar. Mittels der erfindungsgemäßen Ausgestaltung kann vorteilhaft eine infolge der Federkraft selbsttätige Rückstellung des Schneidstrangberührschutzelements realisiert werden.

Ferner wird vorgeschlagen, dass das Schneidstrangberührschutzelement translatorisch beweglich an der Führungseinheit gelagert ist. Hierbei ist das Schneidstrangberührschutzelement mittels Führungsschienen beweglich an der Führungseinheit gelagert. Hierdurch kann konstruktiv einfach eine robuste Lagerung des Schneidstrangberührschutzelements erreicht werden.

Zudem wird vorgeschlagen, dass das Schneidstrangberührschutzelement teleskopartig ausziehbar ausgebildet ist. Hierdurch kann vorteilhaft eine kompakte Anordnung des Schneidstrangberührschutzelements erreicht werden, insbesondere in einer Schneidstrangfreigabeposition des Schneidstrangberührschutzelements.

Ferner geht die Erfindung aus von einer tragbaren Werkzeugmaschine mit einer Kopplungsvorrichtung zur formschlüssigen und/oder kraftschlüssigen Kopplung mit einer erfindungsgemäßen Werkzeugmaschinentrennvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt bilden die erfindungsgemäße Werkzeugmaschinentrennvorrichtung und die erfindungsgemäße tragbare Werkzeugmaschine ein Werkzeugmaschinensystem. Zudem kann vorteilhaft eine tragbare Werkzeugmaschine erreicht werden, die besonders vorteilhaft für ein breites Einsatzspektrum geeignet ist. Ferner kann vorteilhaft eine sichere Handhabung für einen Bediener der tragbaren Werkzeugmaschine erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine nicht erfindungsgemäße tragbare Werkzeugmaschine mit einer erfindungsgemäßen Werkzeugmaschinentrennvorrichtung in einer schematischen Darstellung,
- Fig. 2: eine Detailansicht der nicht erfindungsgemäßen Werkzeugmaschinentrennvorrichtung mit einer in einer Schneidstrangschutzposition befindlichen Schneidstrangberührschutzeinheit in einer schematischen Darstellung,
- Fig. 3: eine Detailansicht der nicht erfindungsgemäßen Werkzeugmaschinentrennvorrichtung mit der in einer Schneidstrangfreigabeposition befindlichen Schneidstrangberührschutzeinheit in einer schematischen Darstellung,
- Fig. 4: eine Schnittansicht der nicht erfindungsgemäßen Werkzeugmaschinentrennvorrichtung mit der in einer Schneidstrangschutzposition befindlichen Schneidstrangberührschutzeinheit in einer schematischen Darstellung,
- Fig. 5: eine Detailansicht einer erfindungsgemäßen Werkzeugmaschinentrennvorrichtung mit einer in einer Schneidstrangschutzposition befindlichen Schneidstrangberührschutzeinheit in einer schematischen Darstellung,
- Fig. 6: eine Detailansicht einer nicht erfindungsgemäßen Werkzeugmaschinentrennvorrichtung mit einer in einer Schneidstrangschutzposition befindlichen Schneidstrangberührschutzeinheit in einer schematischen Darstellung,
- Fig. 7: eine Detailansicht einer weiteren, alternativen erfindungsgemäßen Werkzeugmaschinentrennvorrichtung mit einer in einer Schneidstrangschutzposition befindlichen Schneidstrangberührschutzeinheit in einer schematischen Darstellung und
- Fig. 8: eine Detailansicht einer weiteren, alternativen erfindungsgemäßen Werkzeugmaschinentrennvorrichtung mit einer Schneidstrangberührschutzeinheit in einer schematischen Darstellung.

### Beschreibung der Ausführungsbeispiele

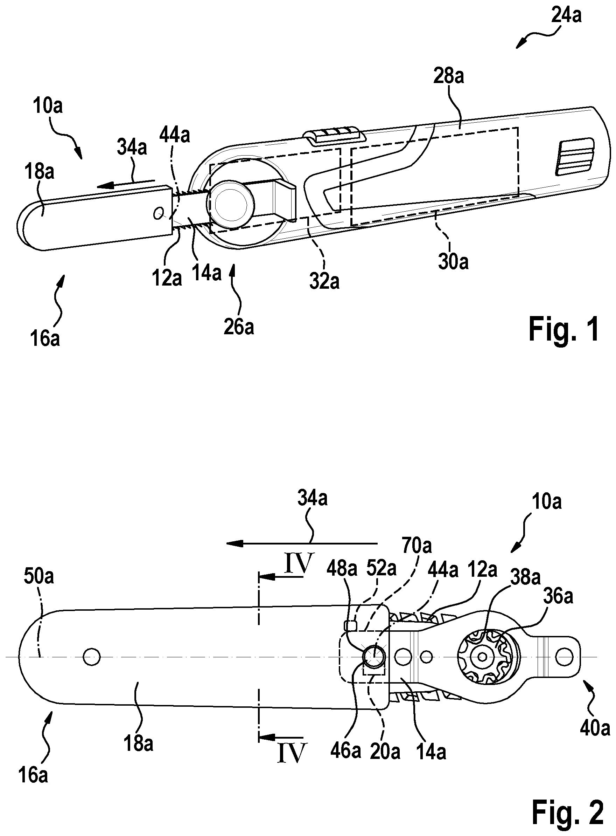

Figur 1 zeigt eine tragbare Werkzeugmaschine 24a mit einer Werkzeugmaschinentrennvorrichtung 10a, die zusammen ein Werkzeugmaschinensystem bilden. Die Werkzeugmaschinentrennvorrichtung 10a umfasst einen Schneidstrang 12a und zumindest eine Führungseinheit 14a zu einer Führung des Schneidstrangs 12a. Zudem umfasst die Werkzeugmaschinentrennvorrichtung 10a zumindest eine Schneidstrangberührschutzeinheit 16a, die zumindest ein an der Führungseinheit 14a beweglich gelagertes Schneidstrangberührschutzelement 18a aufweist, das dazu vorgesehen ist, ein unbeabsichtigtes Berühren des Schneidstrangs 12a in zumindest einer Betriebsposition des Schneidstrangberührschutzelements 18a zumindest weitestgehend zu verhindern. Das Schneidstrangberührschutzelement 18a ist aus Kunststoff gebildet. Es ist jedoch auch denkbar, dass das Schneidstrangberührschutzelement 18a aus einem metallischen Werkstoff oder aus einem anderen, einem Fachmann als sinnvoll erscheinenden Werkstoff gebildet ist.

Die tragbare Werkzeugmaschine 24a weist eine Kopplungsvorrichtung 26a zur formschlüssigen und/oder kraftschlüssigen Kopplung der Werkzeugmaschinentrennvorrichtung 10a auf. Die Kopplungsvorrichtung 26a kann hierbei als Bajonettverschluss und/oder als eine andere, einem Fachmann als sinnvoll erscheinende Kopplungsvorrichtung ausgebildet sein. Ferner weist die tragbare Werkzeugmaschine 24a ein Werkzeugmaschinengehäuse 28a auf, das eine Antriebseinheit 30a und eine Getriebeeinheit 32a der tragbaren Werkzeugmaschine 24a umschließt. Die Antriebseinheit 30a und die Getriebeeinheit 32a sind zur Erzeugung eines auf die Werkzeugmaschinentrennvorrichtung 10a übertragbaren Antriebsmoments auf eine, einem Fachmann bereits bekannte Art und Weise wirkungsmäßig miteinander verbunden. Die Getriebeeinheit 32a ist als Winkelgetriebe ausgebildet. Die Antriebseinheit 30a ist als Elektromotoreinheit ausgebildet. Es ist jedoch auch denkbar, dass die Antriebseinheit 30a und/oder die Getriebeeinheit 32a eine andere, einem Fachmann als sinnvoll erscheinende Ausgestaltung aufweisen. Die Antriebseinheit 30a ist dazu vorgesehen, den Schneidstrang 12a der Werkzeugmaschinentrennvorrichtung 10a in zumindest einem Betriebszustand über die Getriebeeinheit 32a anzutreiben. Hierbei wird der Schneidstrang 12a in der Führungseinheit 14a der Werkzeugmaschinentrennvorrichtung 10a entlang einer Schneidrichtung 34a des Schneidstrangs 12a in der Führungseinheit 14a bewegt.

Figur 2 zeigt die Werkzeugmaschinentrennvorrichtung 10a in einem von der Kopplungsvorrichtung 26a der tragbaren Werkzeugmaschine 24a entkoppelten Zustand. Die Werkzeugmaschinentrennvorrichtung 10a weist den Schneidstrang 12a und die Führungseinheit 14a auf, die zusammen ein geschlossenes System bilden. Der Schneidstrang 12a wird mittels der Führungseinheit 14a geführt. Hierzu weist die Führungseinheit 14a zumindest ein als Führungsnut ausgebildetes Führungselement (hier nicht näher dargestellt) auf, mittels dessen der Schneidstrang 12a geführt wird. Hierbei wird der Schneidstrang 12a mittels die Führungsnut begrenzenden Randbereichen der Führungseinheit 14a geführt. Es ist jedoch auch denkbar, dass das Führungselement in einer anderen, einem Fachmann als sinnvoll erscheinenden Art und Weise, wie beispielsweise als rippenartige Anformung an der Führungseinheit 14a, die in eine Ausnehmung an dem Schneidstrang 12a eingreift, ausgebildet ist. Der Schneidstrang 12a umfasst ferner eine Vielzahl von miteinander verbundenen Schneidstrangsegmenten, die zusammen den als Schneidkette ausgebildeten Schneidstrang 12a bilden.

Zum Antrieb des Schneidstrangs 12a weist die Werkzeugmaschinentrennvorrichtung 10a oder die tragbare Werkzeugmaschine 24a ein Drehmomentübertragungselement 36a auf, das zur Übertragung von Kräften und/oder von Drehmomenten auf den Schneidstrang 12a mit der Antriebseinheit 30a und/oder der Getriebeeinheit 32a verbindbar ist. Bei einer Ausgestaltung der tragbaren Werkzeugmaschine 24a mit dem Drehmomentübertragungselement (hier nicht näher dargestellt) wird das Drehmomentübertragungselement während einer Kopplung der Werkzeugmaschinentrennvorrichtung 10a und der Kopplungsvorrichtung 26a mit dem Schneidstrang 12a verbunden. Bei einer Ausgestaltung der Werkzeugmaschinentrennvorrichtung 10a mit dem Drehmomentübertragungselement 36a sind das Drehmomentübertragungselement 36a und der Schneidstrang 12a selbst nach einer Entkopplung von der Kopplungsvorrichtung 26a im Eingriff. Zu einer Kopplung des mit der Werkzeugmaschinentrennvorrichtung 10a ausgebildeten Drehmomentübertragungselements 36a und der Antriebseinheit 30a und/oder der Getriebeeinheit 32a weist das Drehmomentübertragungselement 36a eine Kopplungsausnehmung (hier nicht näher dargestellt) auf, in die ein Ritzel (hier nicht näher dargestellt) der Antriebseinheit 30a und/oder ein Zahnrad (hier nicht näher dargestellt) und/oder eine verzahnte Welle (hier nicht näher dargestellt) der Getriebeeinheit 32a in einem montierten Zustand eingreift. Die Kopplungsausnehmung ist konzentrisch im Drehmomentübertragungselement 36a angeordnet. Ferner ist das Drehmomentübertragungselement 36a als Zahnrad ausgebildet. Das Drehmomentübertragungselement 36a ist zumindest teilweise in der Führungseinheit 14a gelagert. Hierbei ist das Drehmomentübertragungselement 36a, entlang einer Richtung senkrecht zur Schneidebene betrachtet, zumindest teilweise zwischen Außenflächen der Führungseinheit 14a in einer Ausnehmung 38a der Führungseinheit 14a angeordnet. Ferner ist das Drehmomentübertragungselement 36a drehbar um eine Rotationsachse in der Führungseinheit 14a gelagert, die zumindest im Wesentlichen senkrecht zu den Außenflächen der Führungseinheit 14a bzw. zu der Schneidebene des Schneidstrangs 12a verläuft.

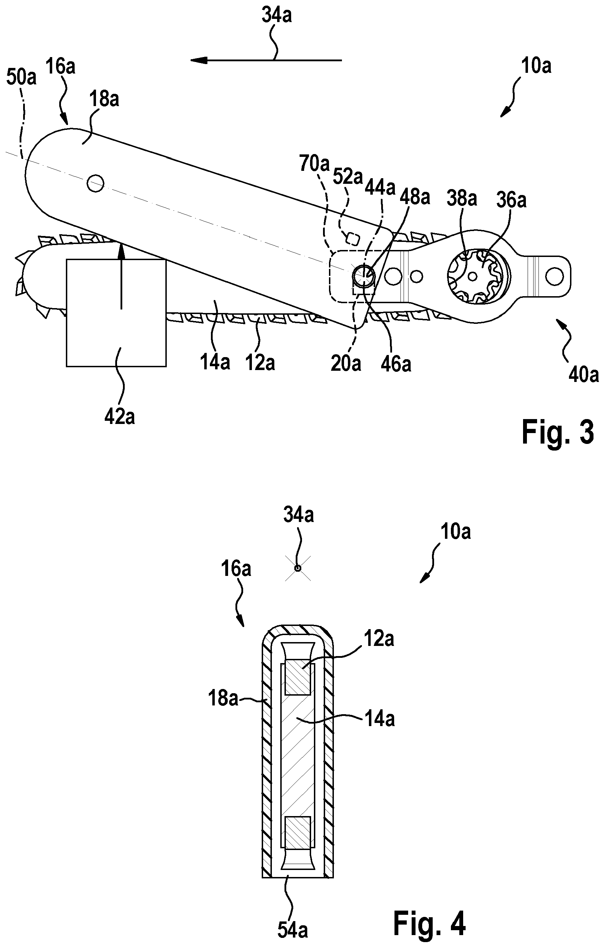

Das Schneidstrangberührschutzelement 18a ist in Figur 2 in einer Schneidstrangschutzposition dargestellt. Hierbei umgibt das Schneidstrangberührschutzelement 18a die Führungseinheit 14a zumindest in einem Teilbereich der Führungseinheit 14a von zumindest zwei Seiten. Das Schneidstrangberührschutzelement 18a umgibt die Führungseinheit 14a bevorzugt in einem Teilbereich der Führungseinheit 14a von zumindest drei Seiten. Hierzu weist das Schneidstrangberührschutzelement 18a, betrachtet in einer zumindest im Wesentlichen senkrecht zu einer Schneidebene des Schneidstrangs 12a verlaufenden Ebene, einen u-förmigen Querschnitt auf (Figur 4). Das Schneidstrangberührschutzelement 18a ist drehbar an der Führungseinheit 14a gelagert. Hierbei weist das Schneidstrangberührschutzelement 18a eine Rotationsachse 44a auf, die zumindest im Wesentlichen senkrecht zu den Außenflächen der Führungseinheit 14a bzw. zu der Schneidebene des Schneidstrangs 12a verläuft. Das Schneidstrangberührschutzelement 18a ist zudem drehbar im Bereich einer Antriebsseite 40a der Führungseinheit 14a an der Führungseinheit 14a gelagert. Das Drehmomentübertragungselement 36a der Werkzeugmaschinentrennvorrichtung 10a ist ebenfalls drehbar im Bereich der Antriebsseite 40a an der Führungseinheit 14a gelagert. Die Antriebsseite 40a der Führungseinheit 14a wird bei einer Kopplung der Werkzeugmaschinentrennvorrichtung 10a und der Kopplungsvorrichtung 26a mit der Kopplungsvorrichtung 26a gekoppelt bzw. in die Kopplungsvorrichtung 26a eingeführt.

Bei einer Bearbeitung eines Werkstücks 42a (Figur 3) wird das Schneidstrangberührschutzelement 18a ausgehend von einer Schneidstrangschutzposition von einem Bediener in eine Schneidstrangfreigabeposition geschwenkt. Das Schneidstrangberührschutzelement 18a kann infolge eines Anlegens des Schneidstrangberührschutzelements 18a an dem Werkstück 42a und einer weiteren Krafteinwirkung in Richtung des zu bearbeitenden Werkstücks 42a ausgehend von der Schneidstrangschutzposition in die Schneidstrangfreigabeposition bewegt werden. Es ist jedoch auch denkbar, dass ein Bediener das Schneidstrangberührschutzelement 18a händisch von der Schneidstrangschutzposition in die Schneidstrangfreigabeposition bewegt. Die Schneidstrangberührschutzeinheit 16a weist ferner zumindest ein Federelement 20a auf, das das Schneidstrangberührschutzelement 18a mit einer Federkraft beaufschlagt. Das Federelement 20a beaufschlagt das Schneidstrangberührschutzelement 18a in Richtung der Schneidstrangschutzposition des Schneidstrangberührschutzelements 18a. Hierbei stützt sich das Federelement 20a mit einem Ende am Schneidstrangberührschutzelement 18a ab und mit einem weiteren Ende stützt sich das Federelement 20a an der Führungseinheit 14a ab. Somit kann gewährleistet werden, dass das Schneidstrangberührschutzelement 18a infolge einer vom zu bearbeitenden Werkstück 42a weg gerichteten Bewegung der Werkzeugmaschinentrennvorrichtung 10a durch die Federkraft des Federelements 20a sicher in die Schneidstrangschutzposition bewegt wird. Das Federelement 20a ist hierbei im Bereich eines Lagerelements 46a der Schneidstrangberührschutzeinheit 16a angeordnet. Das Federelement 20a kann hierbei als Schenkelfeder, als Schraubenfeder usw. ausgebildet sein.

Das Lagerelement 46a der Schneidstrangberührschutzeinheit 16a ist als Lagerbolzen ausgebildet. Zudem ist das Lagerelement 46a dazu vorgesehen, das Schneidstrangberührschutzelement 18a schwenkbar an der Führungseinheit 14a zu lagern. Hierbei greift das Lagerelement 46a zumindest in eine Lagerausnehmung 48a des Schneidstrangberührschutzelements 18a und in eine Lagerausnehmung (hier nicht näher dargestellt) der Führungseinheit 14a ein. Es ist jedoch auch denkbar, dass das Lagerelement 46a eine andere, einem Fachmann als sinnvoll erscheinende Ausgestaltung aufweist, wie beispielsweise eine Ausgestaltung als Scharnier, als Kugelgelenk usw. Das Lagerelement 46a ist auf einer Mittelachse 50a des Schneidstrangberührschutzelements 18a angeordnet. Das Schneidstrangberührschutzelement 18a ist symmetrisch zur Mittelachse 50a ausgebildet. Zudem ist das Lagerelement 46a in einem Bereich der Antriebsseite 40a der Führungseinheit 14a angeordnet. Zu einer Ermöglichung einer Bewegung des Schneidstrangberührschutzelements 18a relativ zur Führungseinheit 14a und relativ zum Schneidstrang 12a weist das Schneidstrangberührschutzelement 18a eine Durchführausnehmung 54a auf (Figur 4).

Die Schneidstrangberührschutzeinheit 16a weist des Weiteren ein Anschlagelement 52a auf, das dazu vorgesehen ist, zumindest eine Bewegungsstrecke des Schneidstrangberührschutzelements 18a ausgehend von der Schneidstrangfreigabeposition in die Schneidstrangschutzposition zu begrenzen. Das Anschlagelement 52a ist einstückig mit dem Schneidstrangberührschutzelement 18a ausgebildet. Zudem wirkt das Anschlagelement 52a zu einer Begrenzung der Bewegungsstrecke des Schneidstrangberührschutzelements 18a mit einem Gegenanschlagelement 70a der Führungseinheit 14a zusammen. Zudem ist es denkbar, dass das Anschlagelement 52a des Weiteren zu einer Begrenzung einer Bewegungsstrecke des Schneidstrangberührschutzelements 18a ausgehend von der Schneidstrangschutzposition in die Schneidstrangfreigabeposition vorgesehen ist.

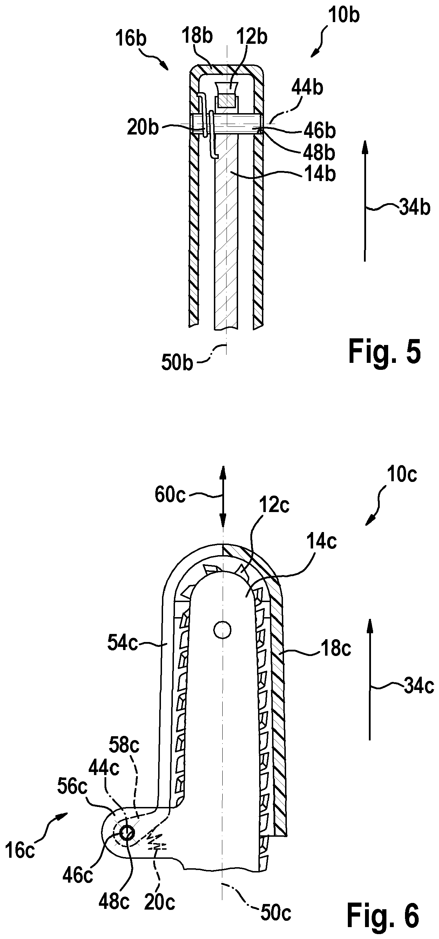

In Figuren 5 bis 8 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis e hinzugefügt. Die nachfolgende Beschreibung beschränkt sich im Wesentlichen auf die Unterschiede zu dem ersten Ausführungsbeispiel in den Figuren 1 bis 4, wobei bezüglich gleichbleibender Bauteile, Merkmale und Funktionen auf die Beschreibung des ersten Ausführungsbeispiels in den Figuren 1 bis 4 verwiesen werden kann.

Figur 5 zeigt eine alternative Werkzeugmaschinentrennvorrichtung 10b. Die Werkzeugmaschinentrennvorrichtung 10b umfasst zumindest einen Schneidstrang 12b und zumindest eine Führungseinheit 14b zu einer Führung des Schneidstrangs 12b. Der Schneidstrang 12b und die Führungseinheit 14b bilden zusammen ein geschlossenes System. Zudem umfasst die Werkzeugmaschinentrennvorrichtung 10b zumindest eine Schneidstrangberührschutzeinheit 16b, die zumindest ein an der Führungseinheit 14b beweglich gelagertes Schneidstrangberührschutzelement 18b aufweist, das dazu vorgesehen ist, ein unbeabsichtigtes Berühren des Schneidstrangs 12b in zumindest einer Betriebsposition des Schneidstrangberührschutzelements 18b zumindest weitestgehend zu verhindern. Das Schneidstrangberührschutzelement 18b ist hierbei drehbar an der Führungseinheit 14b gelagert. Hierzu weist die Schneidstrangberührschutzeinheit 16b ein Lagerelement 46b auf, das als Lagerbolzen ausgebildet ist. Das Lagerelement 46b ist im Bereich einer einer Antriebsseite 40b der Führungseinheit 14b abgewandten Seite der Führungseinheit 14b angeordnet. Ferner erstreckt sich das Lagerelement 46b zumindest im Wesentlichen senkrecht zu Außenflächen der Führungseinheit 14b. Hinsichtlich weiterer Merkmale der Werkzeugmaschinentrennvorrichtung 10b kann auf die in den Figuren 1 bis 4 beschriebene Werkzeugmaschinentrennvorrichtung 10a verwiesen werden.

Figur 6 zeigt eine weitere, alternative Werkzeugmaschinentrennvorrichtung 10c. Die Werkzeugmaschinentrennvorrichtung 10c umfasst zumindest einen Schneidstrang 12c und zumindest eine Führungseinheit 14c zu einer Führung des Schneidstrangs 12c. Der Schneidstrang 12c und die Führungseinheit 14c bilden zusammen ein geschlossenes System. Zudem umfasst die Werkzeugmaschinentrennvorrichtung 10c zumindest eine Schneidstrangberührschutzeinheit 16c, die zumindest ein an der Führungseinheit 14c beweglich gelagertes Schneidstrangberührschutzelement 18c aufweist, das dazu vorgesehen ist, ein unbeabsichtigtes Berühren des Schneidstrangs 12c in zumindest einer Betriebsposition des Schneidstrangberührschutzelements 18c zumindest weitestgehend zu verhindern. Das Schneidstrangberührschutzelement 18c ist hierbei drehbar an der Führungseinheit 14c gelagert. Die Führungseinheit 14c weist hierzu einen Querfortsatz 56c auf, an dem ein Lagerelement 46c der Schneidstrangberührschutzeinheit 16c angeordnet ist. Der Querfortsatz 56c erstreckt sich zumindest im Wesentlichen parallel zu Außenflächen der Führungseinheit 14c und zumindest im Wesentlichen senkrecht zu einer Haupterstreckungsrichtung 60c der Führungseinheit 14c. Das Lagerelement 46c ist als Lagerbolzen ausgebildet und greift in eine an einem Lagerfortsatz 58c des Schneidstrangberührschutzelements 18c angeordnete Lagerausnehmung 48c des Schneidstrangberührschutzelements 18c ein. Der Lagerfortsatz 58c ist hierbei außerhalb einer Mittelachse 50c des Schneidstrangberührschutzelements 18c angeordnet. Somit ist das Lagerelement 46c ebenfalls außerhalb der Mittelachse 50c angeordnet. Hinsichtlich weiterer Merkmale der Werkzeugmaschinentrennvorrichtung 10c kann auf die in den Figuren 1 bis 4 beschriebene Werkzeugmaschinentrennvorrichtung 10a verwiesen werden.

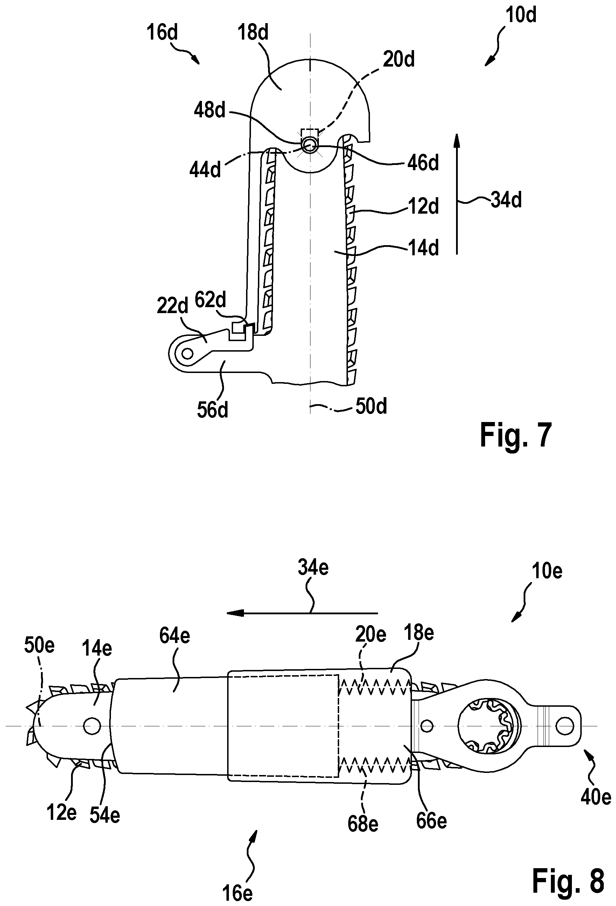

Figur 7 zeigt eine weitere, alternative Werkzeugmaschinentrennvorrichtung 10d. Die Werkzeugmaschinentrennvorrichtung 10d umfasst zumindest einen Schneidstrang 12d und zumindest eine Führungseinheit 14d zu einer Führung des Schneidstrangs 12d. Der Schneidstrang 12d und die Führungseinheit 14d bilden zusammen ein geschlossenes System. Zudem umfasst die Werkzeugmaschinentrennvorrichtung 10d zumindest eine Schneidstrangberührschutzeinheit 16d, die zumindest ein an der Führungseinheit 14d beweglich gelagertes Schneidstrangberührschutzelement 18d aufweist, das dazu vorgesehen ist, ein unbeabsichtigtes Berühren des Schneidstrangs 12d in zumindest einer Betriebsposition des Schneidstrangberührschutzelements 18d zumindest weitestgehend zu verhindern. Das Schneidstrangberührschutzelement 18d ist hierbei drehbar an der Führungseinheit 14d gelagert. Hierzu weist die Schneidstrangberührschutzeinheit 16d ein Lagerelement 46d auf, das als Lagerbolzen ausgebildet ist. Das Lagerelement 46d ist im Bereich einer einer Antriebsseite 40d der Führungseinheit 14d abgewandten Seite der Führungseinheit 14d angeordnet. Ferner erstreckt sich das Lagerelement 46d zumindest im Wesentlichen senkrecht zu Außenflächen der Führungseinheit 14d.

Des Weiteren weist die Schneidstrangberührschutzeinheit 16d zumindest ein Fixierelement 22d auf, das das Schneidstrangberührschutzelement 18d in zumindest einer Position relativ zur Führungseinheit 14d fixiert. Hierbei ist das Fixierelement 22d dazu vorgesehen, das Schneidstrangberührschutzelement 18d in einer Schneidstrangschutzposition zu fixieren. Das Fixierelement 22d ist schwenkbar an einem Querfortsatz 56d der Führungseinheit 14d angeordnet. Es ist jedoch auch denkbar, dass das Fixierelement 22d an einer anderen, einem Fachmann als sinnvoll erscheinenden Position angeordnet ist. Ferner ist das Fixierelement 22d als Rasthacken ausgebildet, der dazu vorgesehen ist, mit einer einstückig mit dem Schneidstrangberührschutzelement 18d ausgebildeten Rastausnehmung 62d des Schneidstrangberührschutzelements 18d zu einer Fixierung des Schneidstrangberührschutzelements 18d in der Schneidstrangschutzposition zusammenzuwirken. Es ist jedoch auch denkbar, dass das Fixierelement 22d als federbelastetes Überrastelement ausgebildet ist, das translatorisch beweglich an der Führungseinheit 14d gelagert ist. Hinsichtlich weiterer Merkmale der Werkzeugmaschinentrennvorrichtung 10d kann auf die in den Figuren 1 bis 4 beschriebene Werkzeugmaschinentrennvorrichtung 10a verwiesen werden.

Figur 8 zeigt eine weitere, alternative Werkzeugmaschinentrennvorrichtung 10e. Die Werkzeugmaschinentrennvorrichtung 10e umfasst zumindest einen Schneidstrang 12e und zumindest eine Führungseinheit 14e zu einer Führung des Schneidstrangs 12e. Der Schneidstrang 12e und die Führungseinheit 14e bilden zusammen ein geschlossenes System. Die Werkzeugmaschinentrennvorrichtung 10e ist hierbei entkoppelt von einem Drehmomentübertragungselement ausgebildet. Zudem umfasst die Werkzeugmaschinentrennvorrichtung 10e zumindest eine Schneidstrangberührschutzeinheit 16e, die zumindest ein an der Führungseinheit 14e beweglich gelagertes Schneidstrangberührschutzelement 18e aufweist, das dazu vorgesehen ist, ein unbeabsichtigtes Berühren des Schneidstrangs 12e in zumindest einer Betriebsposition des Schneidstrangberührschutzelements 18e zumindest weitestgehend zu verhindern. Das Schneidstrangberührschutzelement 18e ist hierbei translatorisch beweglich an der Führungseinheit 14e gelagert. Hierbei ist das Schneidstrangberührschutzelement 18e teleskopartig ausziehbar ausgebildet. Das Schneidstrangberührschutzelement 18e umfasst zumindest zwei ineinanderschiebbare Schneidstrangberührschutzelementteilbereiche 64e, 66e. Es ist jedoch auch denkbar, dass das Schneidstrangberührschutzelement 18e eine von zwei abweichende Anzahl an Schneidstrangberührschutzelementteilbereichen 64e, 66e aufweist. Einer der Schneidstrangberührschutzelementteilbereiche 64e, 66e ist translatorisch verschiebbar im anderen der Schneidstrangberührschutzelementteilbereiche 64e, 66e gelagert. Zudem umfasst die Schneidstrangberührschutzeinheit 16e zumindest zwei Federelemente 20e, 68e, die zumindest einen der Schneidstrangberührschutzelementteilbereiche 64e, 66e des Schneidstrangberührschutzelements 18e mit einer Federkraft beaufschlagen. Hierbei sind die Federelemente 20e, 68e als Schraubendruckfedern ausgebildet. Die Federelemente 20e, 68e sind zwischen den Schneidstrangberührschutzelementteilbereichen 64e, 66e angeordnet. Somit stützen sich die Federelemente 20e, 68e jeweils mit einem Ende an den Schneidstrangberührschutzelementteilbereichen 64e, 66e ab. Somit bilden die Federelemente 20e, 68e Anschlagelemente der Schneidstrangberührschutzeinheit 16e, die eine Bewegungsstrecke der Schneidstrangberührschutzelementteilbereiche 64e, 66e relativ zueinander begrenzen. Des Weiteren weisen die Schneidstrangberührschutzelementteilbereiche 64e, 66e, betrachtet in einer zumindest im Wesentlichen senkrecht zu einer Schneidebene des Schneidstrangs 12e verlaufenden Ebene, einen u-förmigen oder einen o-förmigen Querschnitt auf (hier nicht näher dargestellt). Hinsichtlich weiterer Merkmale der Werkzeugmaschinentrennvorrichtung 10e kann auf die in den Figuren 1 bis 4 beschriebene Werkzeugmaschinentrennvorrichtung 10a verwiesen werden.

## Patentansprüche

1. Werkzeugmaschinentrennvorrichtung mit zumindest einem Schneidstrang (12b; 12d; 12e) und mit zumindest einer Führungseinheit (14b; 14d; 14e) zu einer Führung des Schneidstrangs (12b; 12d; 12e), wobei der Schneidstrang (12b; 12d; 12e) und die Führungseinheit (14b; 14d; 14e) ein geschlossenes System bilden, wobei der Schneidstrang (12b; 12d; 12e) und die Führungseinheit (14b; 14d; 14e) in einem demontierten Zustand des Systems von einem dem System übergeordneten System, insbesondere einer Werkzeugmaschine, unverlierbar miteinander verbunden sind, **gekennzeichnet durch** zumindest eine Schneidstrangberührschutzeinheit (16b; 16d; 16e), die zumindest ein an der Führungseinheit (14b; 14d; 14e) beweglich gelagertes Schneidstrangberührschutzelement (18b; 18d; 18e) aufweist, das dazu vorgesehen ist, ein unbeabsichtigtes Berühren des Schneidstrangs (12b; 12d; 12e) in zumindest einer Betriebsposition des Schneidstrangberührschutzelements (18b; 18c; 18d; 18e) zumindest weitestgehend zu verhindern, wobei das Schneidstrangberührschutzelement (18b; 18d) drehbar an der Führungseinheit (14b; 14d) gelagert ist, wobei die Schneidstrangberührschutzeinheit (16b; 16d) ein Lagerelement (46b; 46d) aufweist, das als Lagerbolzen ausgebildet ist und in zumindest eine Lagerausnehmung (48b; 48d) des Schneidstrangberührschutzelements (18b; 18d) und in eine Lagerausnehmung der Führungseinheit (14b; 14d) eingreift, wobei das Lagerelement (46b; 46d) im Bereich einer einer Antriebsseite (40b; 40d) der Führungseinheit (14b; 14d) abgewandten Seite der Führungseinheit (14b; 14d) angeordnet ist.

2. Werkzeugmaschinentrennvorrichtung nach Anspruch 1, **dadurch gekennzeichnet, dass** das Schneidstrangberührschutzelement (18b; 18d; 18e) die Führungseinheit (14b; 14d; 14e) zumindest in einem Teilbereich der Führungseinheit (14b; 14d; 14e) von zumindest zwei Seiten umgibt.

3. Werkzeugmaschinentrennvorrichtung nach einem der vorhergehenden Ansprüche, **dadurch gekennzeichnet, dass** das Schneidstrangberührschutzelement (18b; 18d; 18e), betrachtet in einer zumindest im Wesentlichen senkrecht zu einer Schneidebene des Schneidstrangs (12b; 12d; 12e) verlaufenden Ebene, einen u-förmigen Querschnitt aufweist.

4. Werkzeugmaschinentrennvorrichtung nach einem der vorhergehenden Ansprüche, **dadurch gekennzeichnet, dass** die Schneidstrangberührschutzeinheit (16b; 16d; 16e) zumindest ein Federelement (20b; 20d; 20e) aufweist, das das Schneidstrangberührschutzelement (18b; 18d; 18e) mit einer Federkraft beaufschlagt.

5. Werkzeugmaschinentrennvorrichtung nach einem der vorhergehenden Ansprüche, **dadurch gekennzeichnet, dass** die Schneidstrangberührschutzeinheit (16d) zumindest ein Fixierelement (22d) aufweist, das das Schneidstrangberührschutzelement (18d) in zumindest einer Position relativ zur Führungseinheit (14d) fixiert.

6. Werkzeugmaschinentrennvorrichtung mit zumindest einem Schneidstrang (12b; 12d; 12e) und mit zumindest einer Führungseinheit (14b; 14d; 14e) zu einer Führung des Schneidstrangs (12b; 12d; 12e), wobei der Schneidstrang (12b; 12d; 12e) und die Führungseinheit (14b; 14d; 14e) ein geschlossenes System bilden, wobei der Schneidstrang (12b; 12d; 12e) und die Führungseinheit (14b; 14d; 14e) in einem demontierten Zustand des Systems von einem dem System übergeordneten System, insbesondere einer Werkzeugmaschine, unverlierbar miteinander verbunden sind, **gekennzeichnet durch** zumindest eine Schneidstrangberührschutzeinheit (16b; 16d; 16e), die zumindest ein an der Führungseinheit (14b; 14d; 14e) beweglich gelagertes Schneidstrangberührschutzelement (18b; 18d; 18e) aufweist, das dazu vorgesehen ist, ein unbeabsichtigtes Berühren des Schneidstrangs (12b; 12d; 12e) in zumindest einer Betriebsposition des Schneidstrangberührschutzelements (18b; 18c; 18d; 18e) zumindest weitestgehend zu verhindern, wobei das Schneidstrangberührschutzelement (18e) translatorisch beweglich an der Führungseinheit (14e) gelagert ist, wobei die Schneidstrangberührschutzeinheit (16b; 16d; 16e) zumindest ein Federelement (20b; 20d; 20e) aufweist, das das Schneidstrangberührschutzelement (18b; 18d; 18e) mit einer Federkraft beaufschlagt, um infolge der Federkraft eine selbsttätige Rückstellung des Schneidstrangberührschutzelements zu realisieren.

7. Werkzeugmaschinentrennvorrichtung nach Anspruch 6, **dadurch gekennzeichnet, dass** das Schneidstrangberührschutzelement (18b; 18d; 18e) die Führungseinheit (14b; 14d; 14e) zumindest in einem Teilbereich der Führungseinheit (14b; 14d; 14e) von zumindest zwei Seiten umgibt.

8. Werkzeugmaschinentrennvorrichtung nach einem der Ansprüche 6 bis 7, **dadurch gekennzeichnet, dass** das Schneidstrangberührschutzelement (18b; 18d; 18e), betrachtet in einer zumindest im Wesentlichen senkrecht zu einer Schneidebene des Schneidstrangs (12b; 12d; 12e) verlaufenden Ebene, einen u-förmigen Querschnitt aufweist.

9. Werkzeugmaschinentrennvorrichtung nach einem der Ansprüche 6 bis 8, **dadurch gekennzeichnet, dass** die Schneidstrangberührschutzeinheit (16d) zumindest ein Fixierelement (22d) aufweist, das das Schneidstrangberührschutzelement (18d) in zumindest einer Position relativ zur Führungseinheit (14d) fixiert.

10. Tragbare Werkzeugmaschine mit einer Kopplungsvorrichtung (26b; 26d; 26e) zur formschlüssigen und/oder kraftschlüssigen Kopplung mit einer Werkzeugmaschinentrennvorrichtung nach einem der Ansprüche 1 bis 5 oder 6 bis 9.

11. Werkzeugmaschinensystem mit einer tragbaren Werkzeugmaschine nach Anspruch 10 und mit zumindest einer Werkzeugmaschinentrennvorrichtung nach einem der Ansprüche 1 bis 5 oder 6 bis 9.

## Claims

1. Power cutting tool, having at least one cutting strand (12b; 12d; 12e) and having at least one guide unit (14b; 14d; 14e) for guiding the cutting strand (12b; 12d; 12e), wherein the cutting strand (12b; 12d; 12e) and the guide unit (14b; 14d; 14e) form a closed system, wherein the cutting strand (12b; 12d; 12e) and the guide unit (14b; 14d; 14e) are captively connected to one another in a state in which the system is dismounted from a system superordinate to the system, in particular from a power tool, **characterized by** at least one cutting strand contact guard unit (16b; 16d; 16e), which has at least one cutting strand contact guard element (18b; 18d; 18e) that is movably mounted on the guide unit (14b; 14d; 14e) and that is designed to at least substantially prevent, in at least one operating position of the cutting strand contact guard element (18b; 18c; 18d; 18e), accidental contact with the cutting strand (12b; 12d; 12e), wherein the cutting strand contact guard element (18b; 18d) is mounted rotatably on the guide unit (14b; 14d), wherein the cutting strand contact guard unit (16b; 16d) has a bearing element (46b; 46d) which is formed as a bearing pin and engages into at least one bearing recess (48b; 48d) of the cutting strand contact guard element (18b; 18d) and into a bearing recess of the guide unit (14b; 14d), wherein the bearing element (46b; 46d) is arranged in the region of a side of the guide unit (14b; 14d), which side is averted from a drive side (40b; 40d) of the guide unit (14b; 14d).

2. Power cutting tool according to Claim 1, **characterized in that** the cutting strand contact guard element (18b; 18d; 18e) surrounds the guide unit (14b; 14d; 14e), at least in a subregion of the guide unit (14b; 14d; 14e), from at least two sides.

3. Power cutting tool according to one of the preceding claims, **characterized in that** the cutting strand contact guard element (18b; 18d; 18e), viewed in a plane running at least substantially perpendicular to a cutting plane of the cutting strand (12b; 12d; 12e), has a U-shaped cross section.

4. Power cutting tool according to one of the preceding claims, **characterized in that** the cutting strand contact guard unit (16b; 16d; 16e) has at least one spring element (20b; 20d; 20e), which subjects the cutting strand contact guard element (18b; 18d; 18e) to a spring force.

5. Power cutting tool according to one of the preceding claims, **characterized in that** the cutting strand contact guard unit (16d) has at least one fixing element (22d), which fixes the cutting strand contact guard element (18d) in at least one position relative to the guide unit (14d).

6. Power cutting tool, having at least one cutting strand (12b; 12d; 12e) and having at least one guide unit (14b; 14d; 14e) for guiding the cutting strand (12b; 12d; 12e), wherein the cutting strand (12b; 12d; 12e) and the guide unit (14b; 14d; 14e) form a closed system, wherein the cutting strand (12b; 12d; 12e) and the guide unit (14b; 14d; 14e) are captively connected to one another in a state in which the system is dismounted from a system superordinate to the system, in particular from a power tool, **characterized by** at least one cutting strand contact guard unit (16b; 16d; 16e), which has at least one cutting strand contact guard element (18b; 18d; 18e) that is movably mounted on the guide unit (14b; 14d; 14e) and that is designed to at least substantially prevent, in at least one operating position of the cutting strand contact guard element (18b; 18c; 18d; 18e), accidental contact with the cutting strand (12b; 12d; 12e), wherein the cutting strand contact guard element (18e) is mounted in a translationally movable manner on the guide unit (14e), wherein the cutting strand contact guard unit (16b; 16d; 16e) has at least one spring element (20b; 20d; 20e) which subjects the cutting strand contact guard element (18b; 18d; 18e) to a spring force in order to realize a spring-force-based automatic resetting of the cutting strand contact guard element.

7. Power cutting tool according to Claim 6, **characterized in that** the cutting strand contact guard element (18b; 18d; 18e) surrounds the guide unit (14b; 14d; 14e), at least in a subregion of the guide unit (14b; 14d; 14e), from at least two sides.

8. Power cutting tool according to one of Claims 6 to 7, **characterized in that** the cutting strand contact guard element (18b; 18d; 18e), viewed in a plane running at least substantially perpendicular to a cutting plane of the cutting strand (12b; 12d; 12e), has a U-shaped cross section.

9. Power cutting tool according to one of Claims 6 to 8, **characterized in that** the cutting strand contact guard unit (16d) has at least one fixing element (22d) which fixes the cutting strand contact guard element (18d) in at least one position relative to the guide unit (14d).

10. Portable machine tool having a coupling device (26b; 26d; 26e) for positive and/or non-positive coupling having a power cutting tool according to one of Claims 1 to 5 or 6 to 9.

11. Machine tool system comprising a portable machine tool according to Claim 10 and comprising at least one power cutting tool according to one of Claims 1 to 5 or 6 to 9.

## Revendications

1. Dispositif de séparation pour machine-outil comprenant au moins une section de coupe (12b ; 12d ; 12e) et au moins une unité de guidage (14b ; 14d ; 14e) pour guider la section de coupe (12b ; 12d ; 12e), la section de coupe (12b ; 12d ; 12e) et l'unité de guidage (14b ; 14d ; 14e) formant un système fermé, la section de coupe (12b ; 12d ; 12e) et l'unité de guidage (14b ; 14d ; 14e), dans un état démonté du système, étant connectées l'une à l'autre de manière imperdable par un système parent du système, en particulier une machine-outil, **caractérisé par** au moins une unité de protection contre le contact de la section de coupe (16b ; 16d ; 16e) qui présente au moins un élément de protection contre le contact de la section de coupe (18b ; 18d ; 18e) supporté de manière déplaçable sur l'unité de guidage (14b ; 14d ; 14e), qui est prévu pour empêcher au moins essentiellement un contact accidentel de la section de coupe (12b ; 12d ; 12e) dans au moins une position de fonctionnement de l'élément de protection contre le contact de la section de coupe (18b ; 18c ; 18d ; 18e), l'élément de protection contre le contact de la section de coupe (18b ; 18d) étant supporté de manière rotative sur l'unité de guidage (14b ; 14d), l'unité de protection contre le contact de la section de coupe (16b ; 16d) présentant un élément de palier (46b ; 46d) qui est réalisé sous forme de boulon de palier et qui s'engage dans au moins un évidement de palier (48b ; 48d) de l'élément de protection contre le contact de la section de coupe (18b ; 18d) et dans un évidement de palier de l'unité de guidage (14b ; 14d), l'élément de palier (46b ; 46d) étant disposé dans la région d'un côté de l'unité de guidage (14b ; 14d) opposé au côté d'entraînement (40b ; 40d) de l'unité de guidage (14b ; 14d).

2. Dispositif de séparation pour machine-outil selon la revendication 1, **caractérisé en ce que** l'élément de protection contre le contact de la section de coupe (18b ; 18d ; 18e) entoure l'unité de guidage (14b ; 14d ; 14e) au moins dans une région partielle de l'unité de guidage (14b ; 14d ; 14e) sur au moins deux côtés.

3. Dispositif de séparation pour machine-outil selon l'une quelconque des revendications précédentes, **caractérisé en ce que** l'élément de protection contre le contact de la section de coupe (18b ; 18d ; 18e), considéré dans un plan s'étendant au moins essentiellement perpendiculairement à un plan de coupe de la section de coupe (12b ; 12d ; 12e), présente une section transversale en forme de u.

4. Dispositif de séparation pour machine-outil selon l'une quelconque des revendications précédentes, **caractérisé en ce que** l'unité de protection contre le contact de la section de coupe (16b ; 16d ; 16e) présente au moins un élément de ressort (20b ; 20d ; 20e) qui sollicite avec une force de ressort l'élément de protection contre le contact de la section de coupe (18b ; 18d ; 18e).

5. Dispositif de séparation pour machine-outil selon l'une quelconque des revendications précédentes, **caractérisé en ce que** l'unité de protection contre le contact de la section de coupe (16d) présente au moins un élément de fixation (22d) qui fixe l'élément de protection contre le contact de la section de coupe (18d) dans au moins une position par rapport à l'unité de guidage (14d).

6. Dispositif de séparation pour machine-outil comprenant au moins une section de coupe (12b ; 12d ; 12e) et au moins une unité de guidage (14b ; 14d ; 14e) pour le guidage de la section de coupe (12b ; 12d ; 12e), la section de coupe (12b ; 12d ; 12e) et l'unité de guidage (14b ; 14d ; 14e) formant un système fermé, la section de coupe (12b ; 12d ; 12e) et l'unité de guidage (14b ; 14d ; 14e), dans un état démonté du système, étant connectées l'une à l'autre de manière imperdable par un système parent du système, en particulier une machine-outil, **caractérisé par** au moins une unité de protection contre le contact de la section de coupe (16b ; 16d ; 16e) qui présente au moins un élément de protection contre le contact de la section de coupe (18b ; 18d ; 18e) supporté de manière déplaçable sur l'unité de guidage (14b ; 14d ; 14e), qui est prévu pour empêcher au moins essentiellement un contact accidentel de la section de coupe (12b ; 12d ; 12e) dans au moins une position de fonctionnement de l'élément de protection contre le contact de la section de coupe (18b ; 18c ; 18d ; 18e), l'élément de protection contre le contact de la section de coupe (18e) étant supporté de manière rotative sur l'unité de guidage (14e), l'unité de protection contre le contact de la section de coupe (16b ; 16d ; 16e) présentant au moins un élément de ressort (20b ; 20d ; 20e) qui sollicite avec une force de ressort l'élément de protection contre le contact de la section de coupe (18b ; 18d ; 18e) afin de réaliser, du fait de la force de ressort, un rappel automatique de l'élément de protection contre le contact de la section de coupe.

7. Dispositif de séparation pour machine-outil selon la revendication 6, **caractérisé en ce que** l'élément de protection contre le contact de la section de coupe (18b ; 18d ; 18e) entoure l'unité de guidage (14b ; 14d ; 14e) au moins dans une région partielle de l'unité de guidage (14b ; 14d ; 14e) sur au moins deux côtés.

8. Dispositif de séparation pour machine-outil selon l'une quelconque des revendications 6 à 7, **caractérisé en ce que** l'élément de protection contre le contact de la section de coupe (18b ; 18d ; 18e), considéré dans un plan s'étendant au moins essentiellement perpendiculairement à un plan de coupe de la section de coupe (12b ; 12d ; 12e), présente une section transversale en forme de u.

9. Dispositif de séparation pour machine-outil selon l'une quelconque des revendications 6 à 8, **caractérisé en ce que** l'unité de protection contre le contact de la section de coupe (16d) présente au moins un élément de fixation (22d) qui fixe l'élément de protection contre le contact de la section de coupe (18d) dans au moins une position par rapport à l'unité de guidage (14d).

10. Machine-outil portative comprenant un dispositif d'accouplement (26b ; 26d ; 26e) pour l'accouplement par engagement par correspondance de formes et/ou par force avec un dispositif de séparation pour machine-outil selon l'une des revendications 1 à 5 ou 6 à 9.

11. Système de machine-outil comprenant une machine-outil portative selon la revendication 10 et au moins un dispositif de séparation pour machine-outil selon l'une quelconque des revendications 1 à 5 ou 6 à 9.
